# EUROPÄISCHE PATENTSCHRIFT

(11) **EP 0 323 603 B1**
(45) Veröffentlichungstag und Bekanntmachung des Hinweises auf die Patenterteilung: **18.11.1993**
(21) Anmeldenummer: 88121276.5
(22) Anmeldetag: 20.12.1988
(51) Int. Cl.: G01B 7/30

(54) **Vorrichtung mit einem Initiator zur Erfassung der Winkelstellung einer Welle**
Device with a proximity switch to obtain the angular position of a shaft
Dispositif avec un détecteur de proximité pour detenir la position angulaire d'un axe

(30) Priorität: 31.12.1987 DE 3744629
(43) Veröffentlichungstag der Anmeldung: 12.07.1989
(73) Patentinhaber: Gulde-Regelarmaturen GmbH & Co. KG, D-67071 Ludwigshafen (DE)
(72) Erfinder: Gonsior, Wolfgang, D-8990 Lindau-Bodolz (DE)
(74) Vertreter: Klose, Hans, Dipl.-Phys.

(56) Entgegenhaltungen:
- EP-A- 0 029 366
- DE-A- 3 133 061
- DE-A- 3 536 833
- US-A- 3 306 997
- US-A- 3 980 846

## Beschreibung

Die Erfindung bezieht sich auf eine Vorrichtung mit einem Initiator zur Erfassung der Winkelstellung einer Welle, enthaltend in einem Gehäuse ein elektrisches Geberelement sowie einen bewegbaren, mit der Welle verbundenen Drehkörper.

Aus der deutschen Patentschrift 37 33 061 ist eine derartige Vorrichtung bekannt, welche als Drehwinkelmeßfühler ausgebildet ist. Der Drehkörper enthält einen ferromagnetischen Teil, der entsprechend der Drehwinkelstellung der Welle den Magnetfluß zwischen einem Permanentmagneten und einer Spule verändert. Die Spule ist Bestandteil des stationär im Gehäuse angeordneten Geberelements, das einen Hochfrequenzschwingkreis aufweist, wobei die Rückkopplung mit dem ferromagnetischen Teil beeinflußbar ist. Die Welle weist ein Gewinde auf und mittels einer Mutter ist der Drehkörper auf der Welle festgelegt. Bei der Fertigung und Montage muß eine genaue Ausrichtung des Drehkörpers mit dem ferromagnetischen Teil sowohl bezüglich der Welle als auch bezüglich des Magnetsystems mit dem Permanentmagneten und der Spule vorgenommen werden. Aufgrund der engen Platzverhältnisse im Gehäuse ergeben sich in der Praxis bei der Herstellung der Schraubverbindung Schwierigkeiten und es ist ein entsprechender Fertigungsaufwand erforderlich. Darüberhinaus bereitet es bei der Montage einer derartigen Vorrichtung, beispielsweise an einem Getriebemotor oder an einem Servoantrieb, in der Praxis oftmals erhebliche Schwierigkeiten, eine exakte Justierung vor Ort entsprechend den Einbaubedingungen durchzuführen, damit bei Erreichen einer Endlage auch tatsächlich des erforderliche Signal erzeugt werden kann. Schließlich besteht die Gefahr, daß die Schraubverbindung sich im Laufe der Zeit lockert und damit die Funktion der Vorrichtung und dem damit verbundenen Anlageteile in Frage steht.

Aus der deutschen Offenlegungsschrift 35 36 833 ist eine Kupplung zur spielfreien Übertragung rotatorischer Bewegungen, insbesonder für Präzisions-Drehpotentiometer, bekannt. Mit einer Eingangswelle und mit einer Ausgangswelle ist jeweils ein Kupplungshebel drehfest verbunden. Hierzu ist jeweils eine Klemmverbindung vorgesehen, welche zwei mit einer Schraube und Mutter gegeneinander verspannbare Teile aufweist. Zur Einstellung und Befestigung des jeweiligen Kupplungshebels auf der Welle müssen die genannten Schrauben gelöst und nach entsprechender Justierung der Kupplungshebel bezüglich der Welle wieder fest angezogen werden. Die endgültige drehfest Verbindung erfolgt erst nach der exakten Positionierung und Justage des Kupplungshebels und dem nachträglichen Festziehen der Schraubverbindung.

Schließlich ist aus der deutschen Offenlegungsschrift 35 42 563 eine Sensorvorrichtung für die Winkelstellung der Antriebseinheit einer Schiffsantriebsvorrichtung bekannt. In einem Gehäuse ist ein Stellungsgeber mit einem Hebel vorgesehen, der an eine Welle befestigt ist. Das Ende des Hebels liegt an einer Kurve an, deren Position sich beispielsweise entsprechend der Ruderstellung verändert. Mittels einer Feder wird der Hebel and die genannte Kurve angedrückt. Zwischen der Welle und dem Hebel ist eine drehfeste Verbindung vorhanden, wobei eine Selbstjustierung nicht möglich ist.

In US-A-3 980 846 ist eine Vorrichtung mit einem Initiator zur Erfassung der Winkelstellung einer Welle beschrieben, enthaltend in einem Gehäuse ein elektrisches Geberelement, einen mit der Welle über eine Klemmverbindung drehfest verbundenen Drehkörper, einen Anschlagkörper an welchen der Drehkörper zur Anlage gebracht werden kann, sowie eine mit dem Drehkörper verbundene und mit dem Geberelement zusammenwirkende Schaltfahne, wobei bei Anlage des Drehkörpers am Anschlagkörper die zur drehfesten Verbindung des Drehkörpers mit der Welle vorgegebene Haltekraft überwindbar und die Welle zur Selbstjustierung des Drehkörpers in eine definierte Endstellung drehbar ist Die Vorrichtung enthält zur Erzeugung der Klemmspannung der Klemmverbindung eine in axiale Richtung wirksame Blattfeder. Die Blattfeder liegt mit ihren freien Enden auf der axialen Stirnfläche des Drehkörpers an und ist gemeinsam mit dem Drehkörper axial zwischen zwei Buchsen angeordnet. Diese Buchsen sind mittels Schrauben auf der Welle festgelegt.

Der Erfindung liegt die Aufgabe zugrunde, eine Vorrichtung der genannten Art mit geringem konstruktiven Aufwand dahingehend weiterzubilden, daß eine einfache und funktionssichere Ausrichtung des Drehkörpers zum Geberelement vorgenommen werden kann. Die Vorrichtung soll eine raum- und gewichtssparende Bauweise aufweisen und der Arbeitsaufwand zur Montage und/oder Justierung soll reduziert werden. Darüber hinaus soll die Vorrichtung in der Weise ausgebildet sein, daß nach Art eines Bausatzes bestimmte Bauteile standardisiert werden, wobei entsprechend der Ausgestaltung des Initiators das Geberelement und der Drehkörper modifiziert sind. Der Drehkörper soll bezüglich der Welle in Umfangsrichtung und/ oder in Achsrichtung in einfacher Weise und ohne zusätzliche Hilfsmittel festgelegt werden können, wobei eine nachträgliche Veränderung ggf. auch von Hand problemlos vergenommen werden soll. Schließlich soll die Vorrichtung in der Weise ausgebildet sein, daß nach einer werkseitig vorgenommenen Vorabeinstellung des Drehkörpers nach dem Einbau eine schnelle und gleichwohl zuverlässige Selbstjustierung vorgenommen werden kann.

Die Lösung dieser Aufgabe erfolgt für die Vorrichtung, welche die Merkmale des Oberbegriffs des Patentanspruchs 1 aufweist, gemäß den im Kennzeichen des Patentanspruchs 1 angegebenen Merkmalen.

Die vorgeschlagene Vorrichtung zeichnet sich durch eine einfache Konstruktion aus und ermöglich eine zuverlässige und gleichwohl bei Bedarf in einfacher Weise veränderbare Einstellung des Drehkörpers bezüglich der Welle. Sowohl in Umfangsrichtung als auch in axialer Richtung kann aufgrund der vorgeschlagenen Klemmverbindung der Drehkörper in einfacher Weise in die gewünschte Position eingestellt werden. Eine nachträgliche Einstellung und Justage kann unter Berücksichtigung der engen Platzverhältnisse und der kleinen Abmessungen problemlos erfolgen, ohne daß hierbei Schrauben gelöst und wieder festgedreht werden müssen. Der Drehkörper besteht zweckmäßig aus einem Kunststoff, der eine hinreichende Elastizität aufweist. Zusätzlich wird auf den Drehkörper ein Federring aus Federstahl angeordnet, der eine Klemmspannung auf den Drehkörper ausübt. Die von dem Drehkörper selbst und/oder von einem Federelement aufgebrachte radiale Klemmspannung wird in der Weise vorgegeben, daß unter den normalen Betriebsbedingungen eine einmal eingenommene Position des Drehkörpers auf der Welle beibehalten wird. Beim Überschreiten vorgegebener Kräfte bzw. Drehmomente kann jedoch der Drehkörper bezüglich der Welle axial und/oder in Umfangsrichtung bewegt werden.

Zur Selbstjustierung des Drehkörpers ist ein Anschlagskörper vorgesehen, an welchen der Drehkörper zur Anlage gebracht werden kann. Damit lassen sich beide Endlagen (bei 90° Arbeitsbereich) problemlos ohne äußeren Eingriff exakt vorbegen. Der Anschlagkörper kann ein separates Bauteil sein, das zweckmäßig auf der Grundplatte im Gehäuse einstellbar angeordnet ist. Die Vorrichtung kann werkseitig fertig montiert werden und nach dem Einbau wird der Elektroantrieb oder dergleichen in der Weise gedreht, daß der Drehkörper am Anschlagkörper anliegt, bevor der maximale Drehwinkel und damit die Endlage erreicht wird. Dreht die Welle weiter, so wird der Drehkörper mittels des Anschlagkörpers festgehalten und die Welle kann exakt auf die geforderte Endposition eingefahren werden. Der Anschlagkörper kann im Rahmen der Erfindung bezüglich des Initiators definiert ausgerichtet werden, damit beim Erreichen der Endstellung das geforderte elektrische Signal abgegeben wird. Der Drehkörper kann bei Anlage an den Anschlagkörper bedarfsweise in Umfangsrichtung oder in axialer Richtung bezüglich der Welle verstellt werden. So kann zur axialen Verstellung der Drehkörper ein Gewinde oder eine Schrägfläche aufweisen, welche mit einem entsprechenden Gewinde der Welle oder einer Schrägfläche der Welle in Eingriff stehen. Kommt der Drehkörper zur Anlage an den Anschlagkörper, so bewirkt ein Weiterdrehen der Welle nicht nur eine Veränderung der Drehwinkellage des Drehkörpers, sondern auch dessen axiale Bewegung.

Das oder die Geberelemente sind auf einer Grundplatte angeordnet, welche insbesondere mittels Schrauben in geeigneter Weise mit dem Gehäuse verbunden ist. Die Grundplatte und ebenso der Gehäuseboden weisen entsprechende Bohrungen auf, durch welche die Welle von außen in das Innere des Gehäuses eingeführt ist. Für die Wellendurchführung ist im Gehäuse eine selbstdichtende Führungsbuchse vorgesehen. Auf der Grundplatte sind der Anschlagkörper sowie elektrische Verbindungselemente des Initiators angeordnet. Ferner können auf der gleichen Grundplatte unterschiedlich ausgebildete Initiatoren angeordnet werden, wobei insbesondere auf Endschalter, Näherungs- oder Schlitz-Initiatoren hingewiesen sei. Für die verschiedenen Ausgestaltungen wird jeweils die gleiche Grundplatte und das gleiche Gehäuse einschließlich Gehäusedeckel verwendet, wobei aufgrund eines derart ausgebildeten Bausatzes recht erhebliche Kostenvorteile erreicht werden. Im Rahmen der Erfindung wird der gleiche Drehköper für die verschiedenen Initiatoren vorgesehen, wobei mit dem Kunststoffteil des Drehkörpers lediglich geeignete Fahnen oder dergleichen verbunden werden.

In einer besonderen Ausgestaltung ist im Boden des Gehäuses eine Führungsbuchse für die Welle angeordnet. Zweckmäßig ist in der Führungsbuchse auch ein Dichtring angeordnet, so daß zumindest eine spritzwasserdichte Abdichtung vorhanden ist. Die axiale Sicherung der Welle gegen ein Herausrutschen aus dem Gehäuse erfolgt mittels auf der Welle innen und außen angebrachten Sicherungsscheiben. Aufgrund der Klemmverbindung kann eine axiale Einstellung des Drehkörpers problemlos vorgenommen werden, wobei nachfolgend die drehwinkelabhängige Justierung mittels des Anschlagkörpers vorgenommen wird. Mittels der Führungsbuchse wird eine gute achsparallele Ausrichtung der Welle im Gehäuse sichergestellt.

Die Erfindung wird nachfolgend anhand der in der Zeichnung dargestellten Ausführungsbeispiele näher erläutert. Es zeigen:
- Fig. 1: eine Aufsicht auf eine Vorrichtung mit Näherungsinitiator,
- Fig. 2: einen Schnitt entlang Schnittlinie AB gemäß Fig. 1,
- Fig. 3: eine Aufsicht auf den Deckel in Blickrichtung III gemäß Fig. 2,
- Fig. 4: eine Aufsicht auf eine Ausführungsform mit Schlitzinitiator,
- Fig. 5: eine Aufsicht auf eine Ausführungsform mit Mikroschalter.

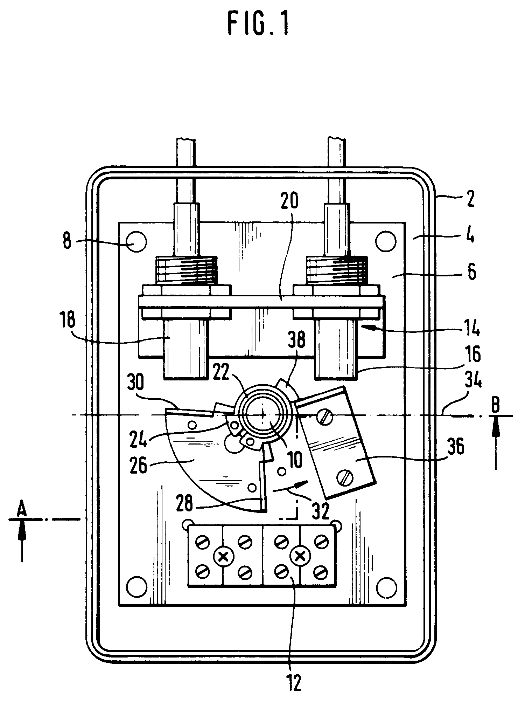

Fig. 1 zeigt eine Aufsicht auf ein nach oben offenes Gehäuse 2, in dessen Innenraum 4 eine Grundplatte 6 mittels Schrauben 8 befestigt ist. In der Mitte ist eine Welle 10 zu erkennen, welche von unten her in den Innenraum 4 des Gehäuses 2 geführt ist.

Auf der Grundplatte 6 ist eine Kontaktleiste 12 angeordnet, an welche in gewohnter Weise elektrische Leitungen angeschlossen werden können. Ferner befindet sich auf der Grundplatte 6 ein elektrisches Geberelement 14, welches zwei hinlänglich bekannte Näherungsinitiatoren 16, 18 enthält. Diese Näherungsinitiatoren 16, 18 sind auf einem Winkelblech 20 befestigt, welches mit der Grundplatte 6 verschraubt ist.

Auf der Welle 10 ist ein Drehkörper 22 mittels einer Klemmverbindung drehfest angeordnet. Mit einem Federring 24, wird zusätzlich und/oder alternativ die Klemmspannung aufgebracht. Der Drehkörper 22 besteht zweckmäßig aus einem Kunststoff, der eine hinreichende Elastizität aufweist und dessen Innendurchmesser bevorzugt mit Preßsitz auf den Außendurchmesser der Welle 10 abgestimmt ist. Die Klemmspannung wird definiert vorgegeben, so daß nach Überwindung einer bestimmten Haltekraft der Drehkörper 22 in Umfangsrichtung und auch in axialer Richtung bezüglich der Welle 10 ausgerichtet werden kann.

Mit dem Drehkörper 22 ist eine Schaltfahne 26 aus Metall verbunden, die sektorförmig ausgebildet ist und sich über einen Winkelbereich von 90° erstreckt. An den beiden Enden der Fahne 26 ist jeweils ein Teil 28, 30 derart nach oben gebogen, daß es orthogonal zur Grundplatte 6 versteht. Diese Teile 28, 30 befinden sich axial auf der gleichen Höhe wie die beiden Näherungsinitiatoren 16, 18. Es ist eine der beiden Endstellungen dargestellt, wobei der Teil 30 mit dem Näherungsinitiator 18 zusammenwirkt. Wird die Welle 10 in Richtung des Pfeiles 32 gedreht, so ändert sich der Zustand des Initiators 18 und es wird ein entsprechendes Signal gegeben. Erreicht der Fahnenteil 28 die durch die strichpunktierte Linie 34 angedeutete andere Endstellung, so gibt entsprechend der andere Näherungsinitiator 16 ein elektrisches Signal. Es versteht sich, daß die Elektronik zur Signalerzeugung und Weiterleitung hier nicht näher dargestellt ist.

Auf der Grundplatte 6 ist ferner ein Anschlagkörper 36 angeordnet, der mit einer Nocke 38 des Drehkörpers 22 zusammenwirkt. Der Anschlagkörper 36 ist mittels Schrauben 39 auf der Grundplatte 6 definiert angeordnet. Bei der Fertigung wird der Drehkörper 22 mit der Fahne 26 nur in einfacher Weise auf die Welle 10 aufgeschoben, ohne daß hierbei eine exakte Justage der Drehwinkellage erfolgt. Mittels den Schrauben 39 kann zweckmäßig eine Grobeinstellung erfolgen. Nachdem vor Ort die Vorrichtung in geeigneter Weise mit einem Stellmotor oder dergleichen verbunden wurde, wird die Welle 10 in der Weise gedreht, daß die Nocke 38, wie in Fig. 1 dargestellt, an dem Anschlagkörper 36 anliegt. Bei einem Weiterdrehen der Welle entgegen der Richtung des Pfeiles 32 wird die Klemmspannung überwunden, und der Drehkörper 22 wird bis zum Erreichen der tatsächlichen Endstellung des Stellmotors vom Anschlagkörper 36 in dieser Position festgehalten. Es ist ersichtlich, daß hierbei problemlos auch Einbauungenauigkeiten und dergleichen abgeglichen werden, ohne daß ein Monteur eine aufwendige Einstellung der Fahne 26 vornehmen muß.

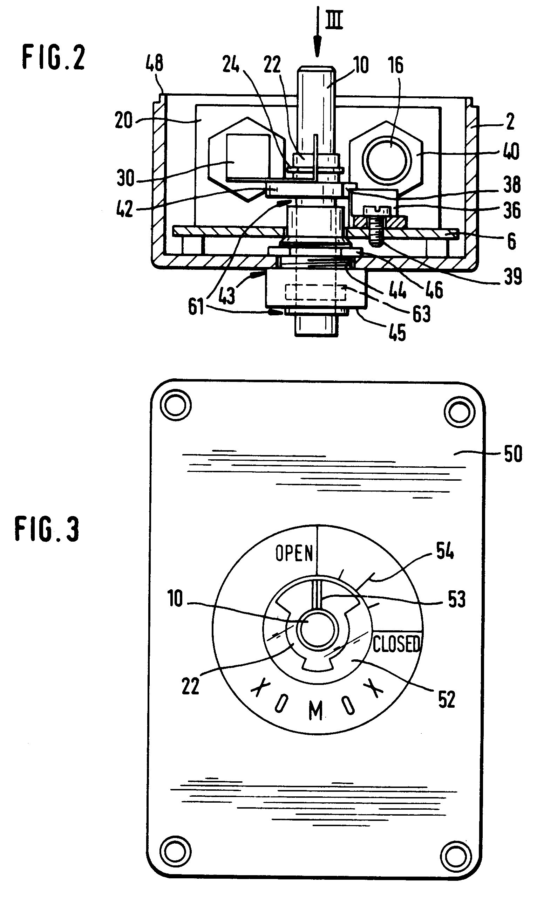

Fig. 2 zeigt einen Schnitt bzw. teilweise in Ansicht das Gehäuse 2 und die Welle 10, wobei die Anordnung der Initiatoren 16, 18 auf dem Winkelblech 20 zu erkennen ist. Die Initiatoren 16, 18 sind mittels Sechskantmuttern 40 mit dem Winkelblech 20 verschraubt. Auf der Rückseite des Winkelbleches 20 befinden sich entsprechende Sechskantmuttern. Die Initiatoren 16, 18 können folglich exakt eingestellt werden, um in den Endstellungen des Drehkörpers bzw. dessen Fahne die geforderten Signale zu liefern. Der nach oben umgebogene Teil 28 der Fahne 26 befindet sich in der dargestellten Position, genau vor dem Initiator 18. Der Drehkörper 22 weist einen kleinen Flansch 42 auf, auf welchem, wie oben bereits beschrieben, die Fahne 26 mittels Nieten befestigt ist. Im Rahmen der Erfindung sind die Vorrichtungen für unterschiedliche Initiatoren grundsätzlich übereinstimmend, wobei lediglich die Fahnen oder Nocken entsprechend ausgebildet sind, die Drehkörper 22 jedoch übereinstimmen. Der am Anschlagkörper 36 anliegende Nocken ist gleichfalls gut zu erkennen. Die Welle 10 weist einen vergleichsweise kleinen Durchmesser auf. Es sei festgehalten, daß bei Schraubverbindungen die Welle bekanntlich einen relativ großen Durchmesser aufweisen muß, um mittels einer zentralen Schraube der Drehkörper zuverlässig auf der Welle festzulegen und die Fahnen wellenmittig bzw. exakt in Axialebenen festzulegen. Die erfindungsgemäße Vorrichtung erfordert hingegen eine kleines Bauvolumen und erlaubt die wirtschaftliche Verwendung besonders kleiner Gehäuse.

Die Welle 10 ist von unten durch eine Führungsbuchse 43, die in einer Bohrung 44 des Bodens des Gehäuses 2 festgelegt ist, durchgeführt. Die axiale Festlegung erfolgt mittels einer Sechskantmutter 46, die im Innenraum am Boden des Gehäuses 2 anliegt; außen weist die Führungsbuchse 43 einen entsprechenden Bund 45 auf. Am oberen Rand 48 des Gehäuses 2 kann ein hier nicht dargestellter Deckel angeordnet sein, welcher des Gehäuse 2 oben, ggf. mittels einer Dichtung, dicht abschließt. Mit Sicherungsscheiben 61 erfolgt die axiale Festlegung. Die Führungsbuchse 43 ermöglicht eine definierte achsparallele Ausrichtung der Welle 10. Nach der Herstellung der Verbindung der Vorrichtung mit einem Stellmotor oder dergleichen erfolgt die selbsttätige Justierung durch Betätigung des Antriebes in die beiden Endstellungen. In der Führungsbuchse 43 ist ein Dichtungsring 63, welcher dichtend an der Welle 10 anliegt.

Fig. 3 zeigt eine Aufsicht auf den erwähnten Deckel 50 in Blickrichtung III gemäß Fig. 2. Der Deckel 50 enthält im Zentrum ein Fenster 52, durch welches hindurch im Rahmen der Erfindung der Drehkörper 22 teilweise zu erkennen ist. Das Fenster besteht aus Glas oder einem durchsichtigen Kunststoff. An seiner Außenfläche enthält der Deckel 50 Markierungen 54, sodaß ohne weiteres die jeweilige Drehstellung abgelesen werden kann. Ferner kann zusätzlich auf die Welle oberhalb vom Drehkörper 22 ein zusätzlicher, gleicher, mit einer Anzeigemarkierung 53 versehener Drehkörper spiegelbildlich aufgesteckt werden, um in Verbindung mit den Markierungen 54 die Drehwinkelstellung der Welle 10 anzuzeigen.

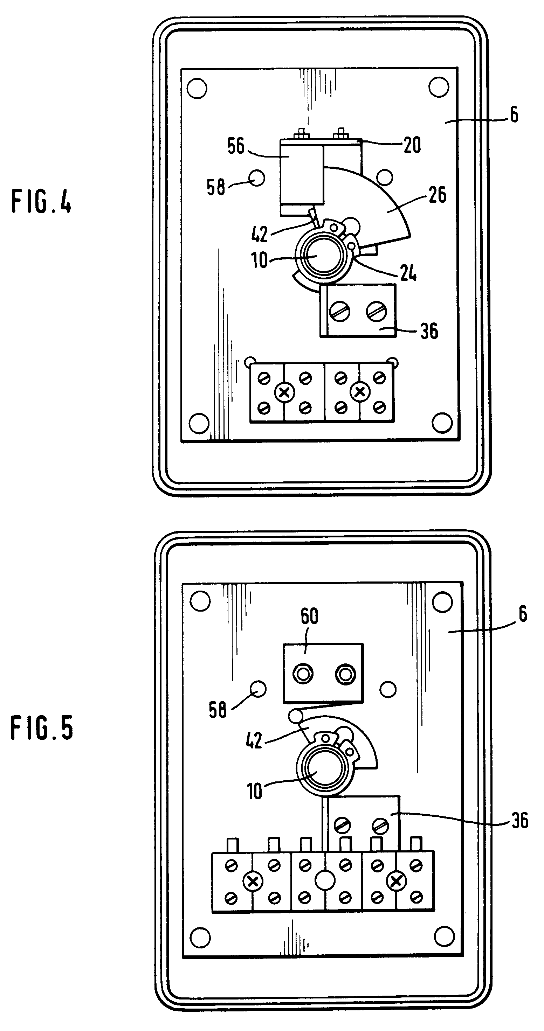

Fig. 4 zeigt eine Auführungsform mit einem Schlitzinitiator 56, welcher mit einem kleinen Winkelblech 20 auf der Grundplatte 6 befestigt ist. Es sind hier Bohrungen 58 zu erkennen, über welche in dem Ausführungsbeispiel gemäß Fig. 1 und 2 das dortige größere Winkelblech mit der Grundplatte 6 verbunden war. Für alle Ausführungsformen werden die gleichen Grundplatten 6 und die gleichen Gehäuse 2 samt Deckel verwendet. Wie bekannt, weist der Schlitzinitiator 56 in einer zur Zeichenebene parallelen Ebene einen Schlitz auf, durch welchen die Fahne 26 bei Drehung der Welle 10 durchgreifen kann. Bei dieser Ausführungsform enthält Fahne 26 an ihren Enden keine hochgebogenen Teile. Im übrigen ist aber die Fahne 26 in übereinstimmender Weise mit dem Drehkörper 22 verbunden, der seinerseits über die erläuterte Klemmverbindung mit der Welle 10 für den normalen Betrieb drehfest vergunden ist.

Schließlich zeigt Fig. 5 eine Ausführungsform, bei welcher als Initiator ein Microschalter 60 auf der Grundplatte 6 angeordnet ist. Der Drehkörper weist bei dieser Ausführungsform keine Fahne auf, sondern der oben bereits erwähnte Nocken bzw. Flansch 42 betätigt unmittelbar den Mikroschalter 60. Wie ersichtlich, ist der Flansch 42 sektorartig präzise ausgebildet und dient derart zur Bestätigung des Mikroschalters. Der gleiche Drehkörper wird mit einer Fahne versehen zum Ansteuern der Initiatoren verwendet.

### Bezugszeichenliste

- 2: Gehäuse
- 4: Innenraum
- 6: Grundplatte
- 8: Schraube
- 10: Welle
- 12: Kontaktleiste
- 14: Geberelement
- 16, 18: Näherungsinitiator
- 20: Winkelblech
- 22: Drehkörper
- 24: Federelement
- 26: Fahne
- 28, 30: Teil von 26
- 32: Pfeil
- 34: Linie
- 36: Anschlagkörper
- 38: Nocke
- 39: Schraube
- 40: Sechskantschraube
- 42: Flansch
- 43: Führungsbuchse
- 44: Bohrung
- 45: Bund
- 46: Sechskantmutter
- 48: Rand
- 50: Deckel
- 52: Fenster
- 54, 55: Markierung
- 56: Schlitzinitiator
- 58: Bohrung
- 60: Mikroschalter
- 61: Sicherungsscheiben
- 63: Dichtungsring

## Patentansprüche

1. Vorrichtung mit einem Initiator zur Erfassung der Winkelstellung einer Welle (10), enthaltend in einem Gehäuse (2) ein elektrisches Geberelement (14), einen mit der Welle (10) über eine Klemmverbindung drehfest verbundenen Drehkörper (22), einen Anschlagkörper (36) an welchen der Drehkörper (22) zur Anlage gebracht werden kann, sowie eine mit dem Drehkörper (22) verbundene und mit dem Geberelement (14) zusammenwirkende Schaltfahne (26) oder Flansch (42), wobei bei Anlage des Drehkörpers (22) am Anschlagkörper (36) die zur drehfesten Verbindung des Drehkörpers (22) mit der Welle (10) vorgegebene Haltekraft überwindbar und die Welle (10) zur Selbstjustierung des Drehkörpers (22) in eine definierte Endstellung drehbar ist,
dadurch gekennzeichnet,
daß die Klemmspannung der Klemmverbindung in radialer Richtung vom Drehkörper (22) selbst und/oder einem den Drehkörper (22) umgebenden Federelement (24) aufgebracht wird und daß das Geberelement (14) auf einer im Gehäuse (2) befestigten Grundplatte (6) angeordnet ist, wobei für unterschiedliche Geberelemente jeweils die gleiche Grundplatte (6) und das gleiche Gehäuse (2) zum Einsatz gelangen.

2. Vorrichtung nach Anspruch 1, dadurch gekennzeichnet, daß der Drehkörper (22) einen Nocken (38) derart aufweist, daß bei Anlage an den Anschlagkörper (36) der Drehkörper (22) bezüglich der Welle (10) in zumindest einer von der axialen Richtung und der Umfangsrichtung verstellbar ist.

3. Vorrichtung nach Anspruch 1 oder 2, dadurch gekennzeichnet, daß der Drehkörper (22) aus einem federelastischen Kunststoff besteht und den Flansch (42) aufweist, an dem bevorzugt die mit dem Geberelement (14) zusammenwirkende Schaltfahne (26) befestigt ist.

4. Vorrichtung nach einem der Ansprüche 1 bis 3, dadurch gekennzeichnet, daß der Anschlagkörper (36) und/oder eine Kontaktleiste (12) auf der Grundplatte (6) angeordnet sind.

5. Vorrichtung nach einem der Ansprüche 1 bis 4, dadurch gekennzeichnet, daß das Gehäuse (2) eine Führungsbuchse (43), insbesondere mit einem Dichtungsring (63), für die Welle (10) aufweist.

6. Vorrichtung nach Anspruch 5, dadurch gekennzeichnet, daß die Führungsbuchse (43) axial im Gehäuse (2), insbesondere mittels eines außerhalb des Gehäuses (2) befindlichen Bundes (45) und eines innerhalb des Gehäuses (2) liegenden Sicherungsringes oder einer Mutter (46), gesichert ist.

7. Vorrichtung nach einem der Ansprüche 1 bis 6, dadurch gekennzeichnet, daß die Welle (10) bezüglich des Gehäuses (2) und/oder der Führungsbuchse (43) axial verstellbar ist und insbesondere mittels des Drehkörpers (22) axial gesichert ist.

8. Vorrichtung nach einem der Ansprüche 1 bis 7, dadurch gekennzeichnet, daß das Gehäuse (2) einen Deckel (50) mit einem Fenster (52) aufweist, durch welches hindurch der Drehkörper (22) oder eine zusätzliche Markierung der Drehwinkelstellung der Welle (10) sichtbar ist.

9. Vorrichtung nach einem der Ansprüche 1 bis 8, dadurch gekennzeichnet, daß der Anschlagkörper (36), insbesondere mittels Schrauben (39) über die Grundplatte (6), in dem Gehäuse (2) einstellbar angeordnet ist.

## Claims

1. Apparatus with an initiator for detecting the rotational position of a shaft (10), comprising a housing (2) containing an electrical sensor element (14), a revolving body (22) non-rotatably connected with the shaft (10) by a clamping connection, a stop body (36) into contact with which the revolving body (22) can be brought, and a switching lug (26) or flange (42) which is connected with the revolving body (22) and co-operates with the sensor element (14), whereby when the revolving body (22) is in contact with the stop body (36) the retaining force necessary for non-rotatable connection of the revolving body (22) with the shaft (10) can be exceeded and the shaft (10) can be rotated to a defined end position for self-adjustment of the revolving body (22), characterised in that the clamping tension of the clamping connection in the radial direction is applied by the revolving body (22) itself and/or a spring element (24) surrounding the revolving body (22), and in that the sensor element (14) is arranged on a base plate (6) fixed in the housing (2), whereby for various sensor elements the same base plate (6) and the same housing (2) are used.

2. Apparatus according to Claim 1, characterised in that the revolving body (22) is provided with a cam (38) such that upon contact with the stop body (36) the revolving body (22) can be adjusted with respect to the shaft brackets (10) in at least one of the axial and circumferential directions.

3. Apparatus according to Claim 1 or 2, characterised in that the revolving body (22) comprises a resiliently elastic plastics material and has a flange (42), on which preferably the switching lug (26) which co-operates with the sensor element (14) is fixed.

4. Apparatus according to one of Claims 1 to 3, characterised in that the stop body (36) and/or a contact strip (12) are arranged on the base plate (6).

5. Apparatus according to one of Claims 1 to 4, characterised in that the housing (2) has a guide bush (43) in particular with a sealing ring (63), for the shaft (10).

6. Apparatus according to Claim 5, characterised in that the guide bush (43) is axially secured in the housing (2) in particular by means of a collar (45) located externally of the housing (2) and a retaining ring or a nut (46) lying internally of the housing (2).

7. Apparatus according to one of Claims 1 to 6, characterised in that the shaft (10) is axially adjustable with respect to the housing (2) and/or the guide bush (43) and in particular is axially secured by means of the revolving body (22).

8. Apparatus according to one of Claims 1 to 7, characterised in that the housing (2) has a cover (50) with a window (52), through which the revolving body (22) or an additional marking of the angular position of the shaft (10) is visible.

9. Apparatus according to one of Claims 1 to 8, characterised in that the stop body (36) is adjustably arranged in the housing (2), in particular by means of screws (39) over the base plate (6).

## Revendications

1. Dispositif comprenant un commutateur destiné à capter la position angulaire d'un arbre (10), qui comprend. dans un boîtier (2), un élément capteur électrique (14), un corps tournant (22) lié solidairement en rotation à l'arbre (10) par une liaison à serrage. un corps de butée (36) contre lequel le corps tournant (22) peut être mis en appui. ainsi qu'une palette de commande (26) ou une collerette (42), solidaire du corps tournant (22) et pouvant coopérer avec l'élément capteur (14), et dans lequel. lorsque le corps tournant (22) est en appui contre le corps de butée (36), la force de fixation imposée pour établir la liaison de solidarisation en rotation entre le corps tournant (22) et l'arbre (10) peut être surmontée et l'arbre (10) peut être amené par rotation dans une position extrême définie pour assurer ainsi l'auto-ajustement du corps tournant (22), ***caractérisé en ce que*** la tension de serrage de la liaison à serrage est développée dans la direction radiale par le corps tournant (22) lui-même et/ou par un élément élastique (24) qui entoure le corps tournant (22), ***et en ce que*** l'élément capteur (14) est agencé sur une platine (6) fixée dans le boîtier (2), la même platine (6) et le même boîtier (2) servant pour différents éléments capteurs.

2. Dispositif selon la Revendication 1, ***caractérisé en ce que*** le corps tournant (22) présente un bossage (38) de telle manière que, lorsqu'il vient en appui contre le corps de butée (36), le corps tournant (22) peut se déplacer par rapport à l'arbre (10) au moins dans l'une des deux directions, la direction axiale et la direction circonférentielle.

3. Dispositif selon la Revendication 1 ou 2, ***caractérisé en ce que*** le corps tournant est composé d'une matière plastique possédant une élasticité de ressort, et présente la collerette (42) à laquelle est fixée de préférence la palette de commande (26) qui coopère avec l'élément capteur (14).

4. Dispositif selon une des Revendications 1 à 3, ***caractérisé en ce que*** le corps de butée (36) et/ou une barrette à bornes (12) sont agencés sur la platine (6).

5. Dispositif selon une des Revendications 1 à 4, ***caractérisé en ce que*** le boîtier (2) présente une douille de guidage (43), en particulier munie d'une bague d'étanchéité (63), pour l'arbre (10).

6. Dispositif selon la Revendication 5, ***caractérisé en ce que*** la douille de guidage (43) est bloquée axialement dans le boîtier (2), en particulier au moyen d'une embase (45) qui se trouve en dehors du boîtier (2) et d'une bague d'arrêt qui se trouve à l'intérieur du boîtier (2), ou d'un écrou (46).

7. Dispositif selon une des Revendications 1 à 6, ***caractérisé en ce que*** l'arbre (10) peut se déplacer axialement par rapport au boîtier (2) et/ou à la douille de guidage (43) et est immobilisé axialement, en particulier au moyen du corps tournant (22).

8. Dispositif selon une des Revendications 1 à 7, ***caractérisé en ce que*** le boîtier (2) présente un couvercle (50) muni d'une fenêtre (52) à travers laquelle on peut voir le corps tournant (22) ou un marquage additionnel de la position d'angle de rotation de l'arbre (10).

9. Dispositif selon une des Revendications 1 à 8, ***caractérisé en ce que*** le corps de butée (36) est monté réglable dans le boîtier (2), en particulier au moyen de vis (39), par l'intermédiaire de la platine (6).
